# EUROPEAN PATENT APPLICATION

(11) **EP 1 932 788 A1**
(43) Date of publication of application: **18.06.2008**
(21) Application number: 07023151.9
(22) Date of filing: 29.11.2007
(51) Int. Cl.: B65G 57/22, B65G 57/32, B65G 47/64, B65G 15/24

(54) **Automatic conveyor apparatus for feeding articles towards a pick up station**

(30) Priority: 01.12.2006 IT PI20060141
(71) Applicant: Morelli Handling and Robotic Systems S.a.s. di Morelli Massimo & C., 51100 Pistoia (IT)
(72) Inventor: Morelli, Massimo, 51100 Pistoia (IT)
(74) Representative: Celestino, Marco

(57) **Abstract**

An automatic conveyor apparatus (1) capable of receiving a continuous succession of articles (24) by a continuous feeding station (6), of conveying them singularly towards a pick up station (16) by means of two lines of carrying parallel (1 and 2) with buffer system and of overlapping them on more levels only in this pick up station (16), after having passed the lines of carrying (1 and 2). Each line of carrying (1 and 2) comprises a plurality of conveyor segments (4 and 4') arranged in series between said station of continuous feeding (6) and said discontinuous pick up station (16), each segment (4 and 4') supplying a conveying and supporting surface for a respective article (20), independent motor means adapted to operate separately each respective segment (4 and 4') [Fig. 4].

## Description

### Field of the invention

The present invention relates to the field of industrial automation and, in particular, it relates to an automatic conveyor of articles, along a production and packaging line, towards a palletization station capable of picking them up and placing them on a pallet, in a single or multiple grip on one or more layers.

In particular, the invention relates to an automatic conveyor of sacks, in particular food products, such as pasta.

### Description of the prior art.

It is known the problem of feeding a continuous succession of packages containing a plurality of objects, "summing them up", by overlapping them on several layers, for eventually arranging them on a pallet and strapping them around.

The articles may be boxes, sacks, plastic film or paper kraft wrapped around packs, boxes with display tray, even of different size from each other. The products contained can be of various type, in particular, pasta or other loose food pieces.

The problem is much more complex when the articles to palletize are flexible sacks containing a plurality of small objects, such as sacks of pasta. In fact, in this case, owing to lack of stiffness, the sacks are instable when they are overlapped on more levels, and they can slip on one another, and cannot be picked up together and placed on a pallet. Furthermore, since, on the one hand, the packages come continuously from a feeding station and, on the other hand, the steps of multiple gripping the overlapped sacks and palletizing them by a robot is discontinuous, it is necessary to have a buffer system owing to the impossibility of coordinating continuous feeding and discontinuous pick up steps.

Sometimes, the pick up step of the sacks by a robot in a pick up station is discontinuous because it has to be often interrupted for arranging a first board on the pick up station, feeding some overlapped articles on this first board, interrupting again for arranging a second board on such layers, as a base for further layers of articles and so on. Similar problems arise when stabilizing sheets have to be arranged between consecutive layers of articles. Furthermore, the pick up step of packages need to be momentarily stopped for carrying out packaging operations, for rotation, for manual intervention of operators, etc.

Conveyors exist having a buffer system and overlapping beforehand the articles. Therefore, in the buffer system the sacks are already overlapped, and are subject to alternating acceleration and stay phases.

In any case, such known conveyors with buffer system have the disadvantage that the overlapped sacks may not remain correctly positioned when are moved to the robotised pick up station.

Furthermore, in order to reduce the slipping risk, the accelerations between movement and stay should be reduced, but this way a slow down of the palletization occurs, and this is undesirable to reduce the production costs.

Another drawback of the known conveyors is that when some sacks fall out from the palletization line, it is often necessary to stop the line for removing manually such sacks, thus increasing the costs.

Therefore, the need is felt of a conveyor with a buffer system that do not accelerate articles that have already been overlapped, and that moves only single articles, allowing this way a very high palletization speed, without the risk of stopping the line for removing slipped articles.

Moreover, the need is felt to provide an automatic conveyor capable of managing the empty spaces available on the conveyor for reducing the distances between the articles during the pick up interruptions and for promptly providing them when the pick up step starts again, making the feeding flow independent from the pick up flow.

### Summary of the invention

It is therefore a feature of the present invention to provide an automatic conveyor apparatus with buffer system capable of accumulating articles before an overlapping step of said articles on more levels.

Another feature of the present invention is to provide a conveyor with buffer system, capable of adding together sacks into at least two overlapped levels and ensuring a correct relative location of the sacks in the entire path from the continuous feeding station up to the discontinuous pick up or palletization station.

A further feature of the invention is to provide an automatic conveyor apparatus with buffer system that ensures a very high conveying and palletizing rate.

Another feature of the present invention is to provide an automatic conveyor apparatus with buffer system for conveying articles from an entry station to a pick up station, having minimum encumbrance with respect to the existing devices and adapted to exploit efficiently large part of the available conveying surface.

Another feature of the invention is to provide an automatic conveyor apparatus with buffer system whose movement is punctually controllable, for optimizing the occupation and/or the saturation rate of the available workspace on the movable surface of the buffer system.

Another feature of the present invention is to provide an automatic conveyor apparatus with buffer system having an easy and accessible structure for maintenance operations.

Another feature of the invention is to provide an automatic conveyor apparatus with buffer system, that allows watching a correct handling process of the packages in the buffer system.

A particular object is to provide an automatic conveyor apparatus with buffer system adapted to process sacks or containers of pasta or other food products.

These and other objects are achieved by an automatic conveyor apparatus capable of conveying articles coming from a feeding station towards a pick up station, characterised in that it provides at least two vertically superimposed conveyor lines adapted to release at least two overlapped articles in said pick up station, said conveyor lines comprising each:
- a plurality of conveyor segments arranged in series between said feeding station and said pick up station, each segment providing a conveying and supporting surface for at least one respective article;
- independent motor means adapted to operate separately each respective segment;
- control means for operating selectively said motor means, such that each segment is operated independently, allowing an independent conveyance on each segment of said articles towards said pick up station, for queuing said articles during a stay of said pick up step in said pick up station.

Advantageously, said control means for operating selectively said motor means comprises:
- presence sensor means associated with each segment, said sensor means being adapted to measure the presence of said articles on each of said segments;
- a control unit adapted to analyse the data coming from said sensor means and adapted to operate said motor means according to a predetermined operating program.

In a particular exemplary embodiment, said motor means comprises:
- a rotary motor associated with each conveyor segment;
- means for transmitting the movement between said motor and said conveyor segment.

In particular, each of said conveyor segments comprises a conveyor belt adapted to provide, to an article, a conveying surface translating between an entry portion and an exit portion, wherein an entry portion of a next conveyor segment is at a minimum distance from an exit portion of a previous conveyor belt.

Advantageously, said or each conveyor belt comprises means for tensioning the belt, in particular, comprising a longitudinally guided slide that is adjustable by a screw.

Advantageously, said sensor means are arranged near said entry portion and/or said exit portion of each conveyor segment.

In a preferred exemplary embodiment, said sensor means are arranged at said exit portion of each conveyor segment.

In particular, said sensor means are selected from the group comprised of:
- optical means;
- ultrasonic means;
- magnetic means;
- mechanical means.

Advantageously said optical means and said ultrasonic means comprises:
- a wave transmitting element arranged near a first edge of said conveyor segment;
- a reflecting element arranged near a second side of said conveyor segment, adapted to reflect said waves of said transmitting element.

In particular, said conveyor segments comprise at least one side edge adapted to guide the movement of the articles and to align them in a row, and adapted to avoid a fall of the articles from said first to said second line.

In particular, said continuous feeding station comprises a distributing segment adapted to supply articles to said first and to said second line in an alternated way.

In particular, said discontinuous pick up station comprises a manipulating robot.

According to another aspect of the invention, the above and other objects are achieved by a method for carrying automatically articles coming from a feeding station towards a pick up station, characterised by the steps of:
- providing at least two vertically superimposed conveyor lines adapted to release at least two overlapped articles in said discontinuous pick up station, said two lines comprising a plurality of independent conveyor segments arranged in series between said first and second station, each segment providing a conveying and supporting surface for at least one respective article;
- operating independently a segment X with respect to a next segment X+1 and to a previous segment X-1, queuing said articles during a stay of said discontinuous pick up step.

In particular, said step of operating independently a segment X, is effected in one of the two following cases:
- lack of articles on said next conveyor segment X+1 and presence of articles on said conveyor segment X;
- presence of articles on said previous conveyor segment X-1, and lack of articles on said segment X;
- in all the other cases stopping segment X.

### Brief description of the drawings.

The invention will be made clearer with the following description of an exemplary embodiment thereof, exemplifying but not limitative, with reference to the attached drawings in which:
- Figures 1 and 2 show an upstream portion of a device according to the invention comprising a feeding station, wherein a distributing segment is depicted respectively in the two possible positions for feeding a upper line or a lower line;
- Fig. 3 shows a downstream portion of such a device comprising a pick up station, wherein four sacks are overlapped into two rows, ready to be picked up as a whole and packaged together;
- Fig. 4 shows a perspective view of a device according to the invention comprising two superimposed conveyor lines, a feeding station and a pick up station;
- Fig. 5 shows a side view of such a device;
- Fig. 6 shows a diagrammatical view of the conveyance of a plurality of articles along the conveyor apparatus, starting from an upstream feeding station up to a downstream pick up station where four articles are overlapped into two overlapped couples;
- Fig. 7 shows a perspective view of a conveyor segment comprising a conveyor belt;
- Fig. 8 shows a portion of a conveyor line comprising three adjacent segments;
- Fig. 9 shows an flowchart that defines exemplary steps of the method according to the invention.

### Description of preferred exemplary embodiments.

The present invention relates to an automatic conveyor apparatus capable of conveying articles, for example sacks, coming from a feeding station, in particular, a continuous feeding station, towards a pick up station, in particular, discontinuous pick up station, and for arranging at least two overlapped articles in said pick up station. A particular example of device according to the invention is capable of arranging groups of four articles on two layers with two articles each, for being eventually arranged on a pallet or in a packaging station downstream of the conveyor apparatus.

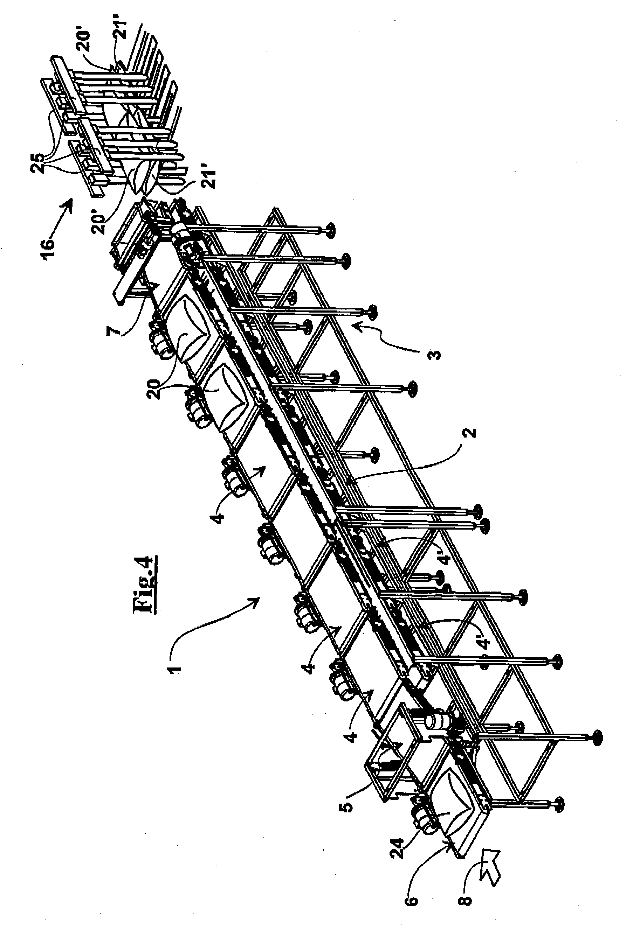

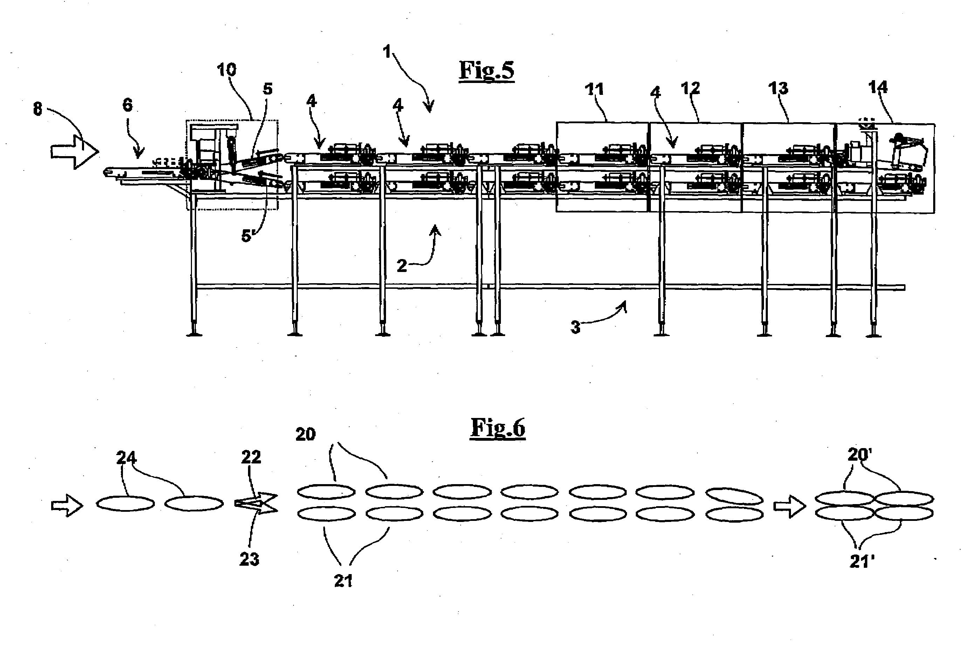

As shown in Figs. 4 and 5, a preferred exemplary embodiment comprises two parallel and horizontal conveyor lines 1 and 2 overlapped vertically. Each of lines 1 and 2 comprises a plurality of conveyor segments, for example independent conveyor belts, indicated respectively with 4 and 4', arranged in series so that an exit portion of a previous segment is at a minimum distance from an entry portion of a next segment, so that an article 20 can easily be transferred from the previous segment to the next segment.

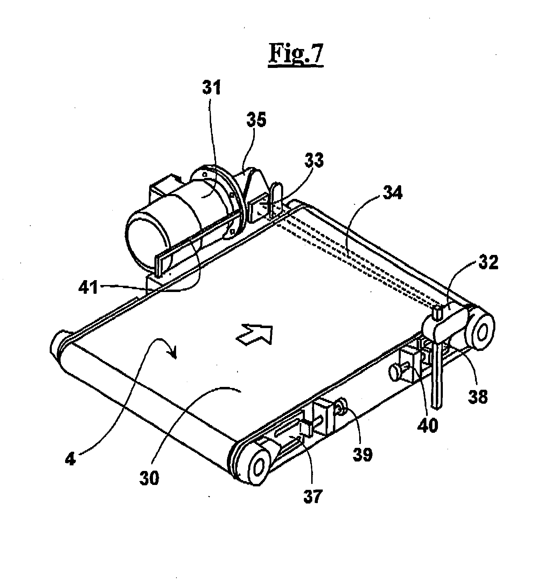

As shown in Fig. 7, each segment 4 comprises a respective motor 31 which can be operated independently from the other, where each motor 31 transmits the movement to corresponding conveyor belt 30 by an elbow-shaped reduction gear 35. Each conveyor segment 4 comprises adjustable means for tensioning the conveyor belt 37 and 38 which can be operated with respective screws 39 and 40. Furthermore, each segment 4 comprises sensor means adapted to test the presence of articles on the segment same, for example such sensor means are optical or ultrasonic means and comprises a transmitter 32 and a reflecting element 33 opposite to the transmitter 32 so that when an article is interposed along the path 34 between the transmitter and the reflective element, a presence signal is sent to a control unit not shown in the figure. In particular, each segment comprises a barrier 41 suitable to align the articles on the conveyor belt 30 and to avoid a fall.

Always as shown in Figs. 4 and 5, the parallel and horizontal upper line 1 and lower line 2 are arranged on a base frame between a continuous feeding station 10 and a discontinuous pick up station 16.

Each article 24, for example a sack of pasta, is fed in quick succession and with continuity upstream from the conveyor apparatus by a conveyor belt 6, and according to arrow 8. Then, the article 24 is transferred on a distributing conveyor segment 5 adapted to selectively convey the article 24 onto the upper line 1 or the lower line 2, operated by a central control unit, so that downstream of the conveyor apparatus a lower article 20' and an upper article 20 are always available.

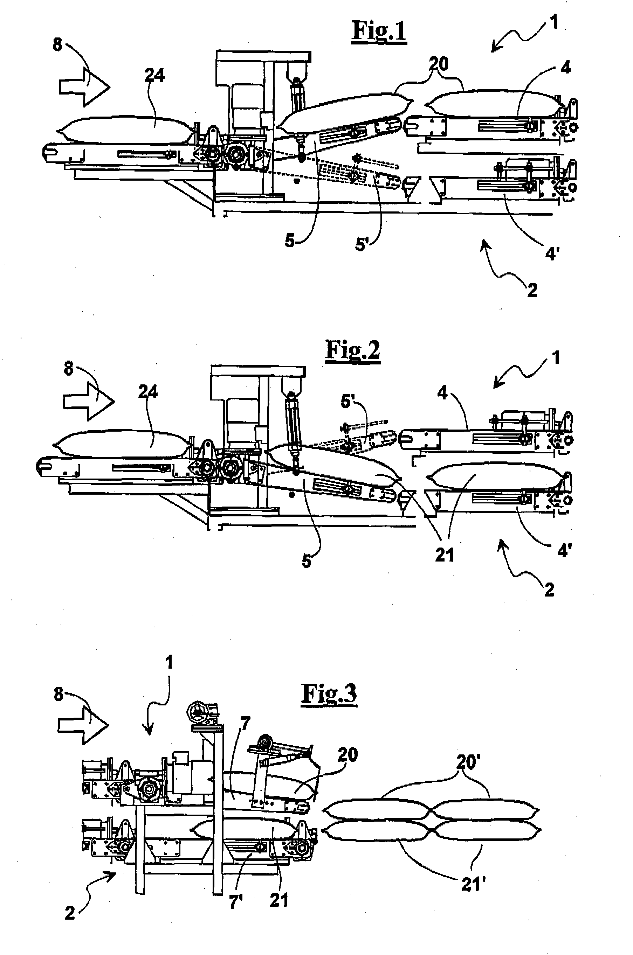

According to the invention, during a stay of the pick up step, necessary for a gripping device to carry out packaging steps, or to introduce a pallet or a board between groups of articles overlapped vertically, the conveyor apparatus allows the articles to queue (Fig. 3) downstream of the device same in order not to stop the continuous feeding of articles from the feeding station 10 (Figs. 1 and 2). In particular, the articles 20 and 21 (Fig. 5) start to queue downstream, just before last segment 14, and then continue queuing in segments 13, 12, 11, etc. This way the conveyor apparatus has a function of buffer system.

Fig. 6 shows the articles 20 and 21 conveyed by the conveyor apparatus 1 in the following segments that they meet. The articles 24 at entry in the feeding station, are led either onto the upper or lower line occupying respectively the segments 20 or 21 following arrows 22 and 23, for arriving downstream of the device for being overlapped on two couples indicated respectively with 20' and 21' (see also Fig. 3) thus creating a group of four articles ready to be picked up for example by clamps 25, manipulated for example by a robot not shown.

Figures 1 and 2 show an upstream portion of the conveyor apparatus according to the invention comprising a feeding station having a distributing segment 5 movable alternatively, between a first and a second position, shown with dotted line 5', capable of conveying an article 24 according to arrow 8 towards a upper 1 or lower 2 conveyor line, bringing the article 24 as 20 or 21. Like segments of lines 1 and 2, also segment 5 can be a conveyor belt.

In Fig. 3 a downstream portion is described of the conveyor apparatus according to the invention where the articles 20 and 21 are on the last segments respectively indicated as 7 and 7' and ready to be deposited in a overlapped way on two levels occupying the positions indicated as 20' and 21', at a downstream pick up station not shown.

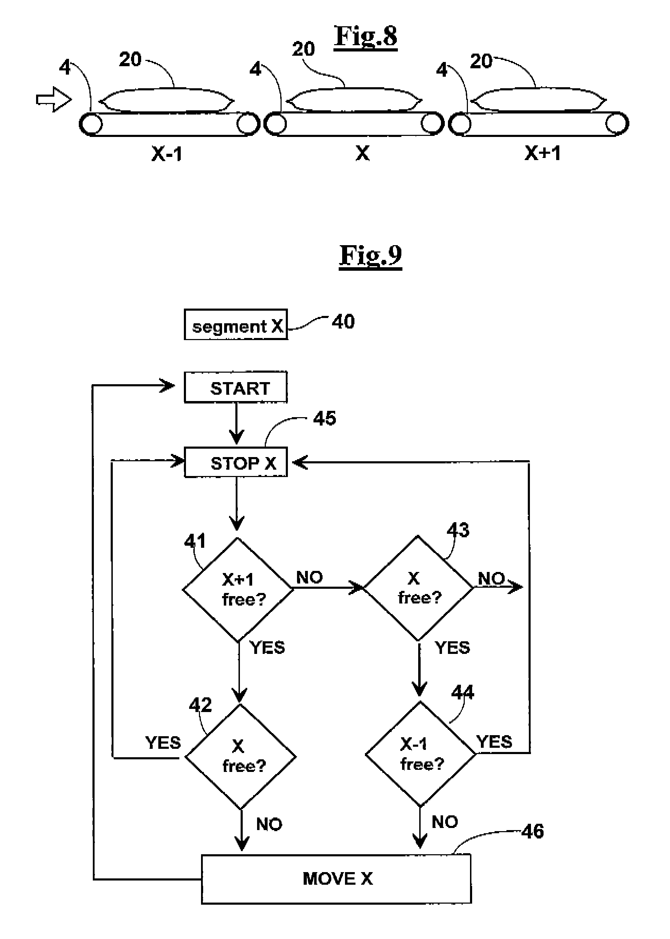

The actuating succession of the segments that form the lines is controlled by a program that executes the method according to the invention according to the steps described in Fig. 9, mounted on a portion of a conveyor line, shown in Fig. 8, comprising three segments 4 adjacent to each other as X-1, X and X+1, associated with a respective article 20. In particular, this method comprises the steps of operating independently each segment X with respect to a next segment X+1 and to a previous segment X-1, queuing said articles only during a stay of the discontinuous pick up process. The queuing step comprises the further step of checking the presence 41 of a first article on the next conveyor segment X+1 with respect to conveyor segment X. If segment X+1 is free (41) the program asks if also segment X is free (42), and in the affirmative it stops (45) segment X, whereas in the negative it starts segment X (46).

Instead, if segment X+1 is not free (41), the program asks segment X is free (43) and in the affirmative it asks if segment X-1 is free (44), otherwise stops segment X (45). If segment X-1 is free (44), it stops segment X (45), otherwise it operates segment X (46).

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. An automatic conveyor apparatus capable of conveying articles coming from a feeding station towards a pick up station, **characterised in that** it provides at least two vertically superimposed conveyor lines adapted to release at least two overlapped articles in said pick up station, said conveyor lines comprising each:
- a plurality of conveyor segments arranged in series between said feeding station and said pick up station, each segment providing a conveying and supporting surface for at least one respective article;
- independent motor means adapted to operate separately each respective segment;
- control means for operating selectively said motor means, such that each segment is operated independently, allowing an independent conveyance on each segment of said articles towards said pick up station, for queuing said articles during a stay of said pick up step in said pick up station.

2. A conveyor apparatus, according to claim 1, wherein said control means for operating selectively said motor means comprises:
- presence sensor means associated with each segment, said sensor means being adapted to measure the presence of said articles on each of said segments;
- a control unit adapted to analyse the data coming from said sensor means and adapted to operate said motor means according to a predetermined operating program.

3. A conveyor apparatus, according to claim 1, wherein said motor means comprises:
- a rotary motor associated with each conveyor segment;
- means for transmitting the movement between said motor and said conveyor segment.

4. A conveyor apparatus, according to claim 1, wherein each of said conveyor segments comprises a conveyor belt adapted to provide, for an article, a conveying surface translating between an entry portion and an exit portion, wherein an entry portion of a next conveyor segment is at a minimum distance from an exit portion of a previous conveyor belt.

5. A conveyor apparatus, according to claim 4, wherein said or each conveyor belt comprises means for tensioning the belt, in particular, comprising a longitudinally guided slide that is adjustable by a screw.

6. A conveyor apparatus, according to claim 2, wherein said sensor means are arranged near said entry portion and/or said exit portion of each conveyor segment.

7. A conveyor apparatus, according to claim 2, wherein said sensor means are arranged at said exit portion of each conveyor segment.

8. A conveyor apparatus, according to claim 2, wherein said sensor means are selected from the group comprised of:
- optical means;
- ultrasonic means;
- magnetic means;
- mechanical means.

9. A conveyor apparatus, according to claim 8, wherein said optical means and said ultrasonic means comprises:
- a wave transmitting element arranged near a first edge of said conveyor segment;
- a reflecting element arranged near a second side of said conveyor segment, adapted to reflect said waves of said transmitting element.

10. A conveyor apparatus, according to claim 1, wherein said conveyor segments comprise at least one side edge adapted to guide the movement of the articles and to align them, and adapted to avoid the fall of the articles from said first to said second line.

11. A conveyor apparatus, according to claim 1, wherein said continuous feeding station comprises a distributing segment adapted to feed in an alternated way articles to said first and to said second line.

12. A conveyor apparatus, according to claim 1, wherein said discontinuous pick up station comprises a manipulating robot.

13. A method for carrying automatically articles coming from a feeding station towards a pick up station, **characterised by** the steps of:
- providing at least two vertically superimposed conveyor lines adapted to release at least two overlapped articles in said discontinuous pick up station, said two lines comprising a plurality of independent conveyor segments arranged in series between said first and second station, each segment providing a conveying and supporting surface for at least one respective article;
- operating independently a segment X with respect to a next segment X+1 and to a previous segment X-1, queuing said articles during a stay of said discontinuous pick up step.

14. A method, according to claim 13, wherein said step of operating independently a segment X, is effected in one of the two following cases:
- lack of articles on said next conveyor segment X+1 and presence of articles on said conveyor segment X;
- presence of articles on said previous conveyor segment X-1, and lack of articles on said segment X;
- in all the other cases stopping segment X.
